# EUROPÄISCHE PATENTSCHRIFT

(11) **EP 1 946 947 B1**
(45) Veröffentlichungstag und Bekanntmachung des Hinweises auf die Patenterteilung: **03.08.2011**
(21) Anmeldenummer: 07023904.1
(22) Anmeldetag: 11.12.2007
(51) Int. Cl.: B60D 1/54

(54) **Anhängevorrichtung mit einer Verriegelungseinrichtung mit Betätigungsring**
Coupling device with an interlocking device with activation ring
Dispositif de remorque doté d'un dispositif de verrouillage avec bague d'actionnement

(30) Priorität: 19.01.2007 DE 102007003774
(43) Veröffentlichungstag der Anmeldung: 23.07.2008
(73) Patentinhaber: WESTFALIA - Automotive GmbH, 33378 Rheda-Wiedenbrück (DE)
(72) Erfinder: Domke, Friedrich, 33442 Herzebrock-Clarholz (DE); Hermbusch, Gerhard, 33449 Langenberg (DE); Wyrwich, Martin, 33378 Rheda-Wiedenbrück (DE)
(74) Vertreter: Bregenzer, Michael

(56) Entgegenhaltungen:
- EP-A- 1 557 298
- DE-A1- 10 243 045
- DE-U- 6 936 956
- FR-A- 2 690 109
- US-A- 5 356 166

## Beschreibung

Die Erfindung betrifft eine Anhängevorrichtung für ein Zugfahrzeug mit einem Kupplungsarm, an dessen Kupplungsende eine Kupplungskugel zum Anhängen eines Anhängers angeordnet ist, mit einer am Zugfahrzeug befestigbaren oder befestigten Halteaufnahme zum Halten des Kupplungsarms an einem Haltebereich und mit einer Verriegelungseinrichtung zum Verriegeln des Kupplungsarms an der Halteaufnahme zumindest in einer zum Anhängen des Anhängers vorgesehenen Arbeitsstellung, wobei in einer Verriegelungsstellung der Verriegelungseinrichtung mindestens ein bezüglich der Halteaufnahme beweglich gelagertes Formschlusselement einer Formschlusselementanordnung von radial außen in mindestens eine Formschlussaufnahme einer Formschlussaufnahmeanordnung am Außenumfang des Haltebereichs formschlüssig eingreift, und wobei die Verriegelungseinrichtung einen von der Halteaufnahme durchdrungenen Betätigungsring zum Verstellen des mindestens einen Formschlusselements aus einer Freigabestellung, in der der Kupplungsarm bezüglich der zugfahrzeugseitigen Halteaufnahme beweglich ist, in die Verriegelungsstellung aufweist.

Aus dem Gebrauchsmuster 693 69 56 ist eine Anhängevorrichtung dieser Art bekannt, deren Kupplungsarm von der fahrzeugseitigen Halteaufnahme entnommen werden kann. An der Halteaufnahme ist ein Druckring, der einen Betätigungsring bildet, zum Betätigen von Formschlusselemente bildenden Kugeln in Richtung der Verriegelungsstellung offenbart. Der Spannring ist eine Mutter, die auf die Halteaufnahme aufgeschraubt ist. Das Betätigen der Verriegelungsvorrichtung ist daher etwas kompliziert. Insbesondere hängt die Verriegelung auch davon ab, wie kräftig die Überwurfmutter angezogen ist. Wenn der Bediener die Überwurfmutter mit geringer Kraft anzieht, kann sich der Kupplungsarm lockern.

Es ist daher die Aufgabe der vorliegenden Erfindung, eine Anhängevorrichtung mit einer einfachen, zuverlässigen Verriegelungseinrichtung bereitzustellen.

Zur Lösung der Aufgabe ist bei einer Anhängevorrichtung eingangs genannten Art vorgesehen, dass der Betätigungsring an der Halteaufnahme linear geführt ist und zum selbsttätigen Verriegeln der Verriegelungseinrichtung durch einen Kraftspeicher in die Verriegelungsstellung beaufschlagt ist.

Der Haltebereich ist beispielsweise an einem Halteende des Kupplungsarmes angeordnet. Es ist auch möglich, dass der Haltebereich an einem Zwischenabschnitt des Kupplungsarmes ist.

Die Halteaufnahme ist zweckmäßigerweise an einem Halte- oder Führungsrohr für den Kupplungsarm angeordnet.

Der Betätigungsring ist an der Halteaufnahme beweglich, z.B. linear und/oder drehbar

Der Kupplungsarm kann abnehmbar sein, so dass er zum Entnehmen aus der Halteaufnahme beweglich ist. Bevorzugt ist jedoch eine Ausführungsform, bei der der Kupplungsarm an der Halteaufnahme verbleibt und zwischen einer Arbeits- und einer Ruhestellung verstellbar ist.

Der Kraftspeicher stellt sicher, dass die Verriegelungseinrichtung stets in Richtung der Verriegelungsstellung betätigt wird. Auf diesem Wege wird eine selbsttätige Verriegelung realisiert. Durch entsprechende Auslegung des Kraftspeichers ist sichergestellt, dass die Betätigungskraft in Richtung der Verriegelungsstellung stets ausreichend ist.

Zweckmäßigerweise ist der Betätigungsring innenseitig gehärtet.

Eine Außenkontur der Halteaufnahme und eine Innenkontur des Betätigungsringes korrelieren. Die Konturen können beispielsweise rund oder polygonal sein.

Das mindestens eine Formschlusselement ist zweckmäßigerweise in einer Art Käfigstruktur und/oder einem Haltevorsprung gehalten, so dass es unverlierbar ist.

Der Kraftspeicher umfasst zweckmäßigerweise eine Federanordnung mit mindestens einer am Zugfahrzeug oder an der Halteaufnahme festgelegten oder sich abstützenden Feder, die beim Verstellen des Betätigungsrings in die Freigabestellung vorgespannt wird. Die Feder kann z.B. eine Zug-, Druck- oder Torsionsfeder sein. Die mindestens eine Feder kann z.B. am Außenumfang oder der Stirnseite des Betätigungsrings insbesondere für eine translatorische Verriegelungsbewegung angreifen. Auch eine tangential auf den Betätigungsring wirkende Feder ist möglich, die eine rotatorische Verriegelungsbewegung des Betätigungsrings bewirkt.

Die Feder kann sich z.B. an einem Stützanschlag im Bereich des kupplungsarmseitigen Endbereichs der Halteaufnahme abstützen. Es ist aber auch möglich, dass die Feder sich in Richtung des Zugfahrzeuges an einem entsprechenden Stützanschlag abstützt und in Richtung des kupplungsarmseitigen Endbereichs der Halteaufnahme wirkt. Jedenfalls wird der Betätigungsring bei der Entriegelungsbewegung in Richtung des jeweiligen Stützbereichs verstellt und der Kraftspeicher vorgespannt.

Der Kraftspeicher kann auch ein elektrischer oder ein fluidtechnischer Kraftspeicher sein, beispielsweise ein hydraulischer oder pneumatischer Kraftspeicher.

Es ist möglich, ein Kraftübertragungsgetriebe vorzusehen, das die Rückstellkraft des Kraftspeichers in Richtung der Verriegelungsstellung verstärkt. Somit kann beispielsweise eine verhältnismäßig schwache Feder verwendet werden, deren Federkraft durch das Kraftübertragungsgetriebe verstärkt wird.

Zweckmäßigerweise wird die Feder von der Halteaufnahme durchdrungen. Die Feder befindet sich somit an einem Außenumfang der Halteaufnahme. Es ist aber auch möglich, eine oder mehrere Federn seitlich neben der Halteaufnahme anzuordnen.

Die Formschlusselementanordnung weist zweckmäßigerweise mindestens drei in Umfangsrichtung des Kupplungsarms zueinander beabstandete Formschlusselemente auf. Diese Formschlusselemente, beispielsweise Kugeln oder Wälzkörper, sind vorteilhaft äquidistant zueinander beabstandet. Mindestens zwei der Formschlusselemente sind an einer Umfangshälfte während das dritte oder auch weitere Formschlusselemente an der anderen Umfangshälfte angeordnet sind. Dies dient einem gleichmäßigen Verriegeln, insbesondere einem gleichmäßigen Verspannen des Kupplungsarmes an der Halteaufnahme. Beispielsweise sind die drei Formschlusselemente um 120° winkelversetzt zueinander angeordnet.

Zweckmäßigerweise verriegelt die Verriegelungseinrichtung den Kupplungsarm drehfest an der Halteaufnahme. Beispielsweise ist einem oder auch mehreren Formschlusselementen eine Formschlussaufnahme zugeordnet, die einen in Unfangsrichtung des Kupplungsarms wirksamen Anschlag aufweist. Wenn das Verriegelungselement eine Kugel ist, wirkt beispielsweise eine zugeordnete Kalotte am Kupplungsarm als drehfest verriegelnde Verriegelungsaufnahme.

Die Formschlusselementanordnung verspannt den mindestens einen Kupplungsarm-Anschlag in der Verriegelungsstellung gegen einen Halteaufnahme-Anschlag in einer Spannrichtung. Der Kupplungsarm sitzt somit fest in der Halteaufnahme. Der Halteaufnahme-Anschlag ist zweckmäßigerweise im Innenraum der Halteaufnahme geschützt angeordnet. Zweckmäßigerweise sind sämtliche Halteaufnahmeanschläge im Innenraum der Halteaufnahme angeordnet. Hier sei bemerkt, dass auch außenseitige Anschläge zwischen Kupplungsarm und Halteaufnahme möglich sind.

Die Formschlussaufnahmeanordnung hat zweckmäßigerweise mindestens eine gegen den Kupplungsarm-Anschlag geneigte Schrägfläche. Diese Schrägfläche, beispielsweise eine Art Einlaufschräge für Kugeln, wirkt im Sinne eines Nachspannens der Verriegelungseinrichtung.

Der Kupplungsarm-Anschlag ist zweckmäßigerweise entgegen einer Richtung im Sinne eines Ausziehens des Kupplungsarms aus der Halteaufnahme wirksam. Somit wird ein Ausziehen des Kupplungsarms aus der Halteaufnahme verhindert. Der Kupplungsarm-Anschlag bildet somit eine Auszugssperre, die beispielsweise seitlich, insbesondere radial, vor den Haltebereich vorsteht. Möglich ist beispielsweise eine stirnseitige Platte, die an eine Stirnseite des Kupplungsarmes angeschraubt ist.

Es muss aber nicht zwingend eine Auszugssperre am Kupplungsarm vorhanden sein, die ein Entnehmen aus der Halteaufnahme verhindert.

So ist es beispielsweise möglich, dass am Kupplungsarm und der Halteaufnahme jeweils Anschläge vorhanden sind, die ein bajonettartiges Einstecken des Kupplungsarmes in die Halteaufnahme ermöglichen. Beispielsweise der Kupplungsarm wird in eine Auszugsstellung gedreht, bei der der Kupplungsarm-Anschlag und der Halteaufnahme-Anschlag nicht mehr aneinander anschlagen.

Zweckmäßigerweise ist der Kupplungsarm an der Halteaufnahme zwischen einer Arbeitsstellung und einer für den Nichtgebrauch vorgesehenen Ruhestellung beweglich gelagert. Dabei ist eine motorische und eine manuelle Verstellung möglich. Der Kupplungsarm verbleibt zweckmäßigerweise an der Halteaufnahme. Beispielsweise ist der Kupplungsarm an der Halteaufnahme bezüglich mindestens einer Bewegungsachse schwenkbar und/oder linear verschiebbar. Der Kupplungsarm kann in der Arbeitsstellung und in der Ruhestellung bezüglich der Bewegungsachse beispielsweise unterschiedliche Längspositionen oder Drehpositionen einnehmen. So ist es beispielsweise möglich, den Kupplungsarm unter einem Stoßfänger hindurch tauchend in eine Ruheposition zu bewegen, wo er hinter dem Stoßfänger des Zugfahrzeuges angeordnet ist.

Die Formschlusselemente sind zweckmäßigerweise in einem Führungs- oder Lagerbereich der Halteaufnahme angeordnet. Somit können Lagerkräfte optimal aufgenommen und Verriegelungskräfte gut übertragen werden.

Die Formschlussaufnahmeanordnung weist zum Festlegen des Kupplungsarmes in der Arbeitsstellung mindestens eine Arbeits-Formschlussaufnahme und zum Festlegen des Kupplungsarms in der Ruhestellung mindestens eine Ruhestellung-Formschlussaufnahme auf. Die Formschlussaufnahmen sind um einen Drehwinkel und/oder um einen Linearabstand voneinander beabstandet, so dass die Verriegelungseinrichtung den Kupplungsarm in der Arbeitsstellung und der Ruhestellung festlegen kann. Es versteht sich, dass auch ein und dieselben Formschlussaufnahmen ein Festlegen in der Ruhe- und der Arbeitsstellung ermöglichen können, beispielsweise wenn der Kupplungsarm schwenkbar ist und die Formschlussaufnahmen am Kupplungsarm zueinander äquidistant sind.

An der Halteaufnahme und dem Kupplungsarm sind zweckmäßigerweise als Verdrehsicherung wirksame Formschlusskonturen vorhanden, die durch lineares Verstellen des Kupplungsarmes bezüglich der Halteaufnahme in Eingriff oder außer Eingriff bringbar sind. Die Formschlusskonturen wirken lediglich als Verdrehsicherung, nicht jedoch als Auszugssperre. Diese Funktion wird durch die Verriegelungseinrichtung bereitgestellt. Die Formschlusskonturen sind beispielsweise am Außenumfang des Kupplungsarmes sowie beispielsweise an einem stirnseitigen, kupplungsarmseitigen Endbereich der Halteaufnahme angeordnet. Aber auch im Innenraum der Halteaufnahme können Formschlusskonturen zum drehfesten Festlegen vorgesehen sein.

Die Formschlusselementanordnung weist zweckmäßigerweise mindestens einen Wälzkörper oder mindestens eine Kugel auf.

Das mindestens eine Formschlusselement ist vorteilhaft an der Halteaufnahme bezüglich des Haltebereichs radial verschieblich gelagert. Es versteht sich, dass die Verriegelungseinrichtung auch eine von der Halteaufnahme separate Einrichtung sein kann. Dann ist eine separate Führung zum radialen Führen der Formschlusselemente zweckmäßig.

Die Formschlussaufnahmeanordnung kann beispielsweise eine Umfangsnut oder eine Teilumfangsnut am Kupplungsarm umfassen, beispielsweise eine Kugelsitzrinne, falls die Formschlusselemente Kugeln sind. Bei Kugeln als Formschlusselementen sind auch Kugelkalotten vorteilhaft. Zweckmäßigerweise weist die Umfangsnut, beispielsweise die Kugelsitzrinne, oder die jeweilige Kugelkalotte eine Einlaufschräge auf, so dass das Formschlusselement leicht in Richtung der jeweiligen Formschlussaufnahme verlagert werden kann. Zweckmäßigerweise bildet die Einlaufschräge auch zugleich eine Spannschräge zum Verspannen des Kupplungsarmes an der Halteaufnahme.

Zweckmäßigerweise hat der Betätigungsring einen Freigabebereich, in den das mindestens eine Formschlusselement bezüglich des Kupplungsarms nach radial außen in die Freigabestellung verlagerbar ist. Der Freigabebereich bildet beispielsweise einen radialen Freiraum für das mindestens eine Formschlusselement. Der Freiraum kann durch einen entsprechend aufgeweiteten ringartigen oder ringnutartigen Bereich gebildet sein. Es ist aber auch möglich, dass das jeweilige Formschlusselement in einer Längsnut geführt ist, die einen radial engeren Spannbereich zum Verspannen des Formschlusselementes in der Formschlussaufnahme und einen radial weiteren Freigabebereich aufweist. Die Längsnut kann beispielsweise in Betätigungsrichtung des Betätigungsringes verlaufen. Es ist aber auch möglich, dass beispielsweise eine schräg oder wendelförmige Nut am Betätigungsring zum Betätigen des jeweiligen Formschlusselementes vorgesehen ist.

Der Betätigungsring hält das mindestens eine Formschlusselement zweckmäßigerweise in der Freigabestellung in dem Freigabebereich, so dass das mindestens eine Formschlusselement nicht aus dem Freigabebereich freikommt und verloren gehen kann. Beispielsweise ist zwischen dem Freigabebereich des Betätigungsrings und der Halteaufnahme ein Freiraum vorhanden, der jedenfalls kleiner ist als die Hälfte eines Außenumfangs des jeweiligen Formschlusselementes, beispielsweise einer Kugel. Es versteht sich, dass zum Halten der Formschlusselemente auch eine separate Einrichtung beispielsweise eine Art Fangkäfig oder dergleichen, möglich ist.

Zweckmäßigerweise hat der Betätigungsring einen Spannbereich zum Spannen des mindestens einen Formschlusselements in die Verriegelungsstellung. Der Spannbereich umfasst beispielsweise eine Spann-Schrägfläche, z.B. Keilschräge. Zweckmäßigerweise befindet sich der Spannbereich neben dem Freigabebereich. Der Spannbereich kann beispielsweise durch einen konisch verlaufenden Ringbereich gebildet sein. Wenn einem jeweiligen Formschlusselement eine Längsnut am Betätigungsring zugeordnet ist, hat auch diese Längsnut jeweils zweckmäßigerweise einen Spannbereich, beispielsweise eine Keilschräge.

Die Spann-Schrägfläche des Betätigungsrings zum Betätigen des mindestens einen Formschlusselements hat vorteilhaft einen flachen, eine Selbsthemmung bewirkenden Winkel, z.B. 2-5 Grad, insbesondere etwa 3 Grad. Der Spannschräge kann optional ein parallel zur Verstellachse des Betätigungsrings verlaufender und/oder zur Spann-Schrägfläche gegensinnig schräger und/oder gerundeter Halte-Abschnitt vorgelagert sein, der die Formschlusselemente auch bei extremer Belastung des Kupplungsarms in den Formschlussaufnahmen hält.

Vorteilhaft hat die Anhängevorrichtung eine Kraftverstärkungseinrichtung zum Betätigen des Betätigungsrings unter Verstärkung einer Bedienkraft eines Bedieners. Die Kraftverstärkungseinrichtung kann beispielsweise ein Verstärkungsgetriebe umfassen.

Die Verriegelungseinrichtung hat vorteilhaft bedienkraftverstärkend wirkenden Betätigungshebel zum Betätigen des Betätigungsrings. Der Betätigungshebel ist beispielsweise an der Halteaufnahme oder am Zugfahrzeug, beispielsweise dessen Querträger, schwenkbar gelagert. Aber auch indirekte Betätigung des Betätigungsrings, beispielsweise mit Hilfe eines Bowdenzugs, durch einen manuell zu betreibenden oder motorischen Entriegelungsantrieb, sind möglich.

Der Betätigungshebel kann mit dem Betätigungsring gekoppelt sein, beispielsweise durch eine Mitnehmer-Nut-Anordnung. Vorteilhaft ist jedoch der Betätigungshebel von dem Betätigungsring entkoppelt schwenkbar. An einem Hebelarm des Betätigungshebels ist beispielsweise eine Betätigungsschulter vorgesehen, die auf den Betätigungsring wirkt.

Der Betätigungshebel hat vorteilhaft zwei Hebelarme, die die Halteaufnahme umgreifend auf den Betätigungsring wirken. Dadurch ist eine gleichmäßige Krafteinwirkung auf den Betätigungsring gewährleistet. Ein Verkanten wird verhindert.

Die Betätigungseinrichtung für den Betätigungsring kann auch einen beispielsweise vom Innenraum des Zugfahrzeugs betätigbaren Bowdenzug zum Betätigen des Betätigungsringes aufweisen.

Auch eine motorische Antriebsanordnung zum Betätigen des Betätigungsrings in die Freigabestellung ist vorteilhaft. Bei der Antriebsanordnung ist es zweckmäßig, wenn sie bei Nichtbetätigung ein Verstellen des Betätigungsringes in die Verriegelungsstellung freigibt. Beispielsweise ist ein Elektromagnet zur Betätigung des Betätigungsringes möglich, der keine Kraft auf den Betätigungsring ausübt, wenn er stromlos ist.

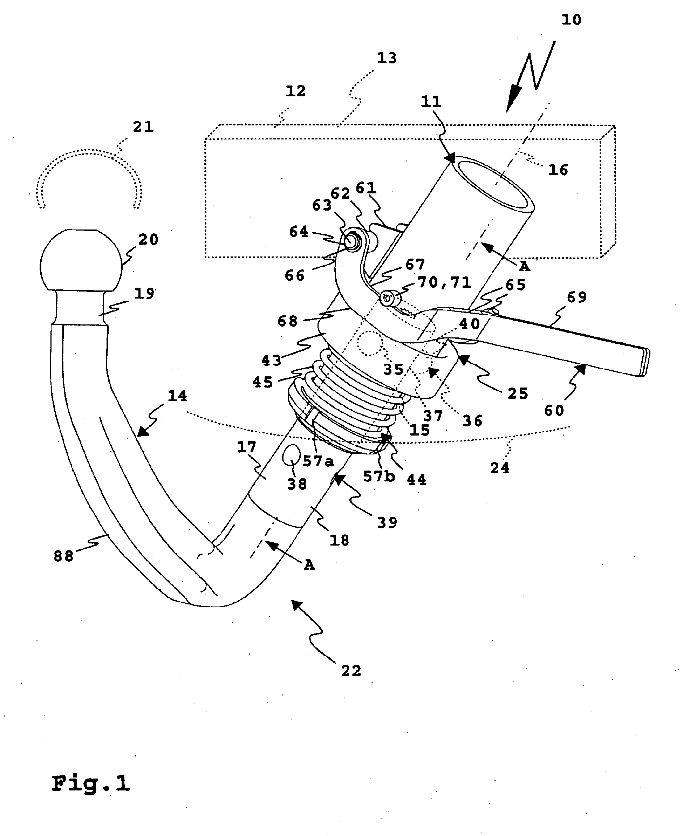

- Figur 1: eine perspektivische Schrägansicht einer Anhängevorrichtung in Arbeitsstellung, ,

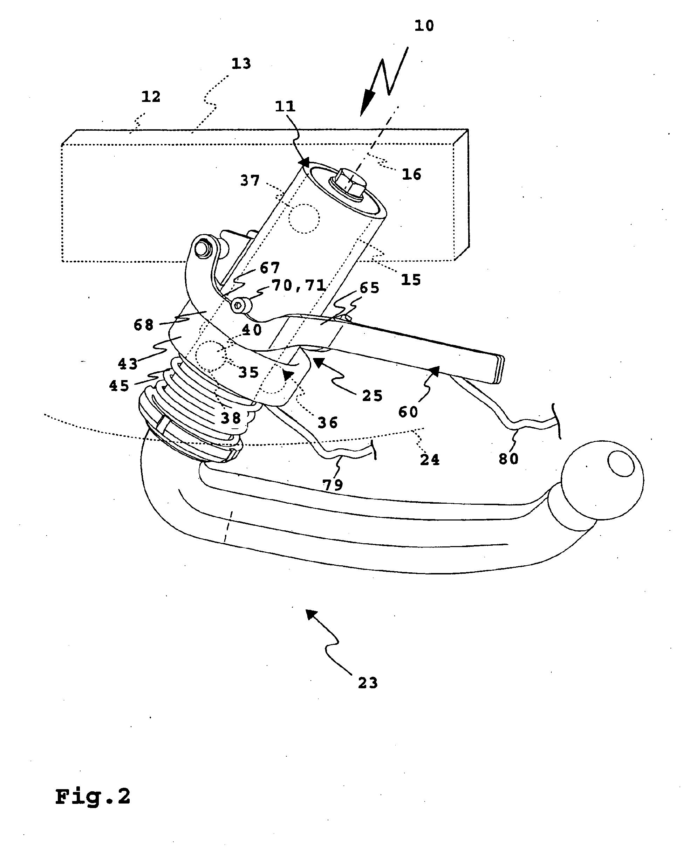

- Figur 2: die Anhängevorrichtung gemäß Figur 1 in einer Ruhestellung,
- Figur 3: die Anhängevorrichtung gemäß Figur 1 beim Übergang zwischen der Arbeitsstellung und der Ruhestellung mit einer entriegelten Verriegelungseinrichtung,
- Figur 4: eine Schnittdarstellung einer Halteaufnahme sowie eines Haltebereichs des Kupplungsarmes und der Verriegelungseinrichtung der Anhängevorrichtung gemäß Figuren 1, 2 und 3 in einer der Arbeitsstellung zugeordneten Verriegelungsstellung, etwa entlang einer Schnittlinie A-A in Figur 1,
- Figur 4b: einen Ausschnitt B aus Figur 4,
- Figur 5: einen Schnitt entsprechend Figur 4, jedoch mit in Ruheposition verriegelten Kupplungsarm,
- Figur 6: einen Schnitt entsprechend Figuren 4, 5 bei der Zwischenstellung des Kupplungsarmes etwa entsprechend Figur 3,
- Figur 7: den Kupplungsarm der Anhängevorrichtung gemäß vorstehender Figuren,
- Figur 8a, 8b: Schnittdarstellungen alternativer Betätigungsringe,
- Figur 8c: eine Draufsicht auf den Betätigungsring gemäß Figur 8b, und
- Figur 9: einen Schnitt entsprechend Figur 6 mit einer Verriegelungseinrichtung, die einen elektrischen Betätigungsantrieb und einen alternativen Kraftspeicher aufweist.

Eine fahrzeugseitige Halterung 11 einer Anhängevorrichtung 10 ist beispielsweise an einem Querträger 12 eines Zugfahrzeugs 13 befestigt oder befestigbar, z.B. mit nicht dargestellten angeschweißten Laschen oder dergleichen. Ein Kupplungsarm 14 ist in eine Halteaufnahme 15 der Halterung 11 eingesteckt. Der Kupplungsarm 14 ist an der Halteaufnahme 15 in zwei Bewegungsfreiheitsgraden bezüglich einer Bewegungsachse 16 verstellbar gelagert, nämlich entlang der Bewegungsachse 16 linear verschieblich, die insofern eine Längsachse bildet, und zudem schwenkbar um die Bewegungsachse 16, so dass die Bewegungsachse 16 auch eine Schwenkachse bildet.

Der Kupplungsarm 14 der Anhängevorrichtung 10 ist manuell zwischen den Stellungen 22, 23 verstellbar, wobei alternativ motorische Antriebskonzepte möglich sind.

Die Halterung ist rohrartig bzw. bildet ein Halterohr, in das ein Halteende 17 des Kupplungsarms 14 mit einem Haltebereich 18 eingesteckt ist. An einem dem Halteende 17 entgegengesetzten Endbereich befindet sich ein Kupplungsende 19 des Kupplungsarms 14 mit einem Kugelkopf 20 zum Ankuppeln eines Anhängers 21.

Der Kupplungsarm 14 ist zwischen einer Arbeitsstellung 22 zum Anhängen des Anhängers 21 und einer Ruhestellung 23 beweglich an der Halterung 11 gelagert. In der Arbeitsstellung 22 steht das Kupplungsende 19 nach hinten vor das Zugfahrzeug 13 vor, so dass der Anhänger 21 angekoppelt werden kann. Beim Schwenken in die Ruhestellung 23 schwenkt der Kupplungsarm 14 zweckmäßigerweise unter einem Stoßfänger 24 durch, so dass er sich in der Ruhestellung 23 ganz oder zumindest teilweise hinter dem Stoßfänger 24 befindet. Der Kupplungsarm 14 ist dann gegen Sicht und Beschädigungen abgedeckt und beeinträchtigt ferner die Wirksamkeit des Stoßfängers 24 nicht.

Der Kupplungsarm 14 ist in der Arbeitsstellung 22 und in der Ruhestellung 23 mit Hilfe einer Verriegelungseinrichtung 25 an der Halteaufnahme 15 bezüglich der Bewegungsachse 16 axial unverschieblich und drehfest verriegelbar. Somit ist zum Festlegen in der Ruhestellung 23 keine separate Verriegelungseinrichtung oder eine beispielsweise am Querträger 12 angeordnete Halterung für den Kupplungsarm 14 erforderlich.

Die Halterung 11 ist rohrartig ausgestaltet. Ein in der Zeichnung unterer Führungsrohrabschnitt 26 bildet einen Führungsbereich 27 für den Haltebereich 18 des Kupplungsarms 14. Der Führungsbereich 27 hat einen kleineren Innenquerschnitt als ein sich daran anschließender, oberer Schutzrohrabschnitt 28. In der Ruhestellung 23 steht das Halteende 17 des Kupplungsarms 14 bis in den Schutzrohrabschnitt 28 vor und wird von diesem geschützt. In der Arbeitsstellung 22 ist der Kupplungsarm 14 im Wesentlichen aus dem Schutzrohrabschnitt 28 heraus axial in Richtung des Führungsbereichs 27 verschoben.

Zur Drehbarkeit des Kupplungsarms 14 bezüglich der Halteaufnahme 15 haben der Führungsbereich 27 und der Haltebereich 18 runde Außen- bzw. Innenkonturen. Bei einem ausschließlich axial verschieblichen oder einsteckbaren Kupplungsarm sind auch polygonale, elliptische oder sonstige den jeweiligen Kupplungsarm drehfest festlegende Konturen möglich.

Zwischen dem Schutzrohrabschnitt 28 und dem engeren Führungsrohrabschnitt 26 ist ein Halteaufnahme-Anschlag 29 ausgebildet, gegen den ein Kupplungsarm-Anschlag 30 des Kupplungsarms 14 in der Arbeitsstellung 22 anschlägt. Der Kupplungsarm-Anschlag 30 ist durch einen Kupplungsarm-Vorsprung 31 am Halteende 17 gebildet.

Der Halteaufnahme-Anschlag 29 erstreckt sich über den gesamten Innenumfang der Halteaufnahme 15, so dass der Kupplungsarm-Vorsprung 31 in jedem Fall gegen den Halteaufnahme-Anschlag 29 anschlägt und insofern eine Auszugssperre 32 bildet. Zwar erstreckt sich beim Ausführungsbeispiel der Kupplungsarm-Anschlag 30 über den gesamten Außenumfang des Halteendes 17. Zur Bildung einer Auszugssperre würde es aber an sich genügen, wenn der Kupplungsarm-Anschlag 30 nur an einer Stelle radial vor den Außenumfang des Kupplungsarms 14 vorsteht.

Der Kupplungsarm-Vorsprung 31 ist durch ein plattenartiges Kopfstück 33 gebildet, das einfach montierbar ist: der Kupplungsarm 14 wird in die Halteaufnahme 15 eingesteckt und sodann stirnseitig das Kopfstück 33 mittels einer Schraube 34 an der Stirnseite des Halteendes 17 befestigt. Es versteht sich, dass alternative Befestigungskonzepte, beispielsweise Schweißen, insbesondere Punktschweißen, oder Kleben möglich sind.

Auch die übrigen Bauteile der Anhängevorrichtung 10, insbesondere der Kupplungsarm 14 sind günstig zu fertigen. Dennoch hat die Anhängevorrichtung 10 eine zuverlässige und betriebssichere Funktionsweise und ist einfach bedienbar. Beispielsweise sind sämtliche beweglichen Bauteile der Verriegelungseinrichtung 25 fahrzeugseitig im Bereich der Halterung 11 oder an der Halterung 11 angeordnet, während der Kupplungsarm 14 keine beweglichen Bauteile aufweist. Er kann aus einer Rohstange gebogen, als Gussteil, Schmiedeteil oder dergleichen mechanisch hoch belastbar und dennoch günstig hergestellt werden.

Zwar ist der Kupplungsarm 14 von der Halterung 11 nicht entfernbar (aufgrund der Auszugssperre 32). Dennoch ist das nachfolgend beschriebene Verriegelungskonzept der Verriegelungseinrichtung 25 auch bei Anhängevorrichtungen mit abnehmbarem Kupplungsarm 14 vorteilhaft anwendbar:

Die Verriegelungseinrichtung 25 enthält Formschlusselemente 35 einer Formschlusselementanordnung 36, die bezüglich des Kupplungsarms 14 radial verstellbar sind, wobei sie in einer Verriegelungsstellung in Formschlussaufnahmen 37 und 38 einer Formschlussaufnahmeanordnung 39 eingreifen. Die Formschlussaufnahmen 37 sind der Arbeitsstellung 22, die Formschlussaufnahmen 38 der Ruhestellung 23 zugeordnet.

Zwar wäre es möglich, als Formschlusselemente insbesondere vorn konische Sperrbolzen oder Wälzkörper, beispielsweise Walzen, Rollen oder dergleichen zu verwenden. Beim Ausführungsbeispiel werden die Formschlusselemente 35 jedoch durch Kugeln 40 gebildet.

Die Formschlussaufnahmen 37 und 38 sind vorliegend Kugelkalotten, so dass die Kugeln 40 den Kupplungsarm 14 nicht nur axial bezüglich der Bewegungsachse 16, sondern auch in Drehrichtung festlegen.

Anstelle der im Ausführungsbeispiel realisierten KalottenFormschlussaufnahmen, beispielsweise der Ruhestellungs-Formschlussaufnahmen 38, können auch andere Aufnahme-Geometrien z.B. eine Umfangsnut 89, insbesondere eine Kugelsitzrinne, vorgesehen sein.

Die Formschlusselemente 35 sind in Lagerausnehmungen 41 an der Halteaufnahme 15 axial beweglich gelagert. Die Lagerausnehmungen 41 sind beispielsweise Bohrungen 42 im Führungsbereich 27.

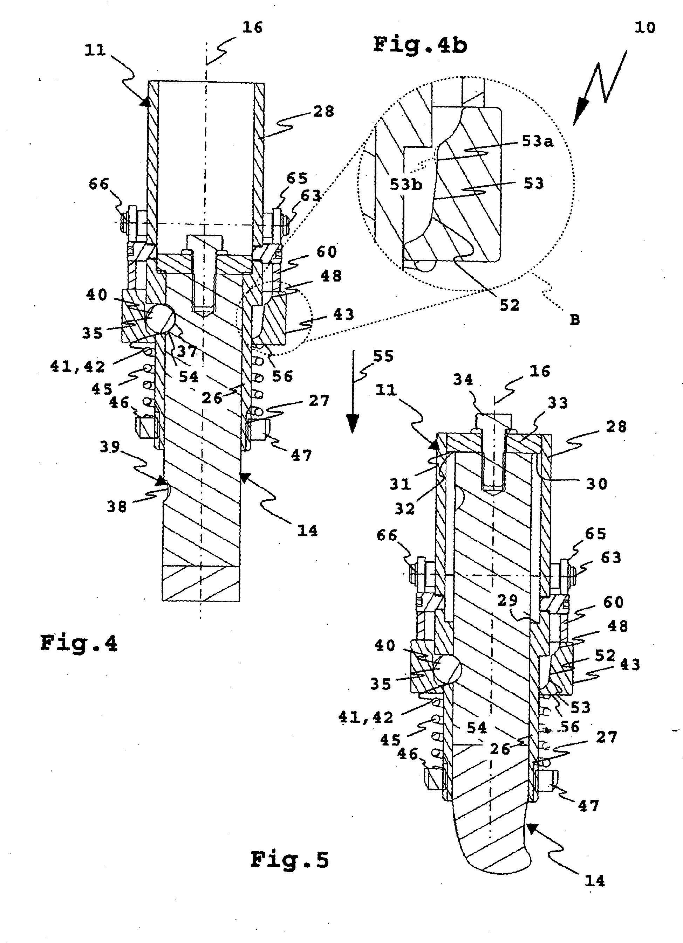

Die Formschlusselemente 35 sind mit einem Betätigungsring 43 in eine Verriegelungsstellung, die in den Figuren 4 und 5 deutlich wird, verstellbar. Der Betätigungsring 43 ist am Außenumfang der Halterung 11 angeordnet und wird von dieser durchdrungen. Der Betätigungsring 43 ist an der Halterung 11 axial verschieblich und vorliegend auch drehbar.

Zum Entriegeln der Verriegelungseinrichtung 25 wird der Betätigungsring 43 entgegen der Kraftwirkung eines Kraftspeichers 44 betätigt, so dass der Kraftspeicher 44 Kräfte aufnimmt. Der Kraftspeicher 44 umfasst beispielsweise eine Feder 45, die sich an einem Stützvorsprung 46 der Halterung 11 abstützt. Die Feder 45 ist eine Schraubenfeder, die von der Halterung 11 durchdrungen ist.

Der Stützvorsprung 46 ist in einem unteren, dem Kupplungsarm 14 zugewandten Endbereich der Halterung 11 angeordnet und wird vorliegend durch einen Stützring 47 gebildet, der beispielsweise auf den unteren Führungsrohrabschnitt 26 außen aufgeschraubt ist. Es versteht sich, dass beim Stützring 47 auch andere Befestigungsarten, z.B. Schweißen oder Kleben, möglich sind. Ferner ist es möglich, an Stelle des aufgeschraubten Stützrings 47 beispielsweise einen einstückig an der Halterung 11 angeformten Stützvorsprung vorzusehen.

Der Kraftspeicher 44 beaufschlagt den Betätigungsring 43 in seine Verriegelungsstellung, bei der der Betätigungsring 43 die Formschlusselemente 35 in die Formschlussaufnahmen oder 38 drückt. Dann ist der Kupplungsarm 14 an der Halterung 11 verriegelt.

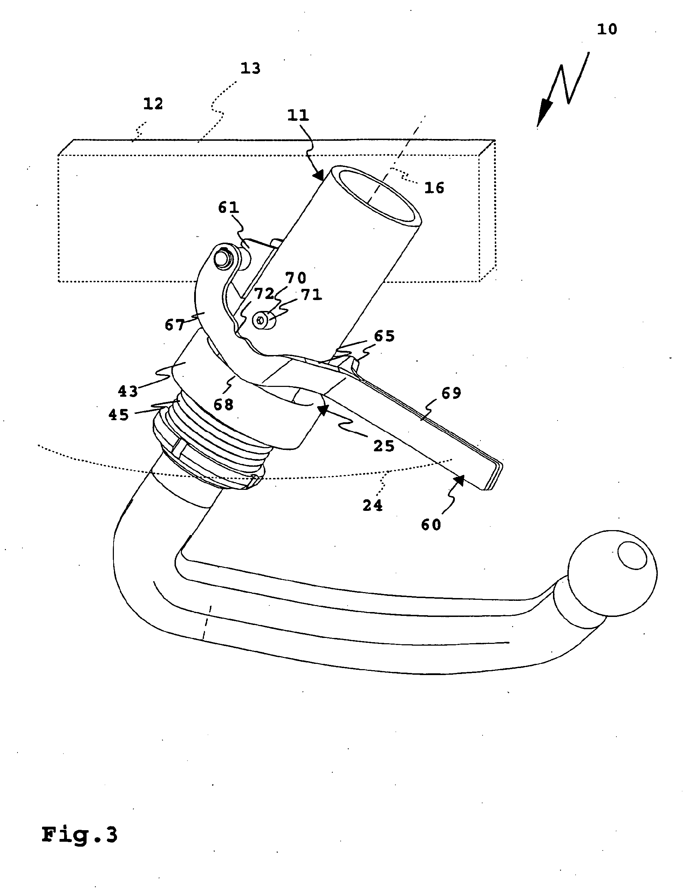

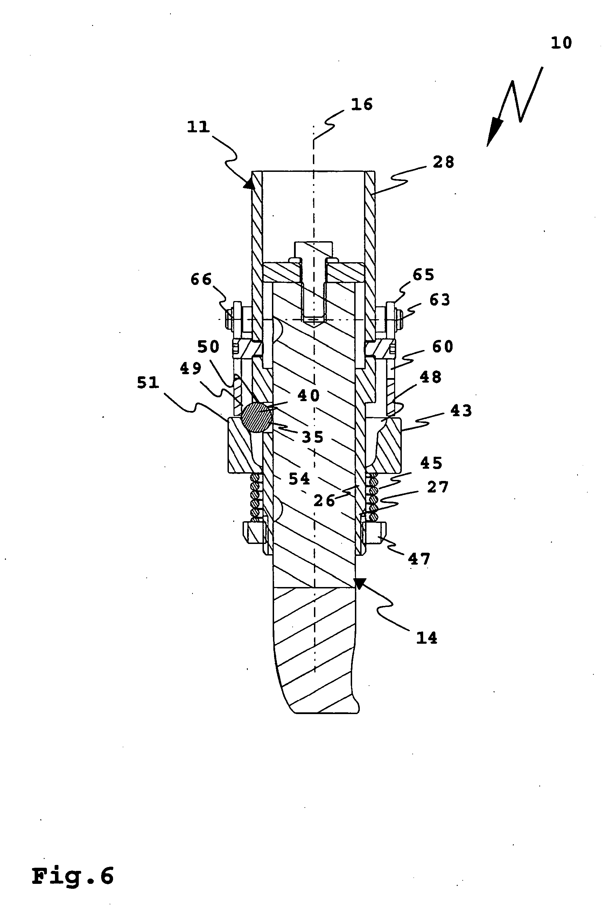

Selbst in der Entriegelungsstellung (Figuren 3, 6) kommen die Formschlusselemente 35 nicht von dem Betätigungsring 43 frei. Zwar können sie dann nach radial außen aus den Formschlussaufnahmen 37 oder 38 herausfallen und in einen radialen Freiraum eines Freigabebereichs 48 des Betätigungsrings 43 gelangen. Dennoch ist ein Abstand 49 zwischen den Austrittsöffnungen 50 der Lagerausnehmungen 41 und einem oberen Rand 51 des Betätigungsrings 43 kleiner als 1/4 des Außenumfangs einer Kugel 40.

Die Feder 45 begrenzt den Betätigungshub des Betätigungsrings 43 in die Entriegelungsstellung, derart dass der Abstand 49 nicht so groß wird, dass die Kugeln 40 durch ihn hindurchdringen und aus der Anhängevorrichtung 10 herausfallen können. Windungen der Feder 45 liegen dann dicht gepackt unmittelbar aufeinander und erlauben keine weitere Kompression der Feder 45.

Der Freigabebereich 48 verläuft konisch schräg und bildet insofern einen Fangbereich für die Kugeln 40. An den Freigabebereich 48 schließt sich ein Spannbereich 52 zum Spannen der Formschlusselemente 35 in die Formschlussaufnahmen 37 oder 38 an. Zwar würde es prinzipiell genügen, dass der Spannbereich 52 einen kleineren Innenumfang als der Freigabebereich 48 aufweist und insofern die Formschlusselemente 35 in Richtung der Formschlussaufnahmen 37, 38 mit über den gesamten Stellbereich des Spannbereichs 52 gleichmäßiger Kraft verlagert. Beim Betätigungsring 43 ist jedoch eine Spannschräge 53 vorgesehen, die die Kugeln 40 in die Verriegelungsstellung beaufschlagt. Die Spannschräge 53 drückt die Formschlusselemente 35 durch die Kraftwirkung der Feder 45 in die Lagerausnehmungen 41 und somit in die Formschlussaufnahmen 37 oder 38.

Die Spannschräge 53 hat vorteilhaft einen flachen, eine Selbsthemmung des Betätigungsrings 43 bewirkenden Winkel, z.B. 2-5 Grad, insbesondere etwa 3 Grad.

Der Spannschräge 53 kann optional ein parallel zur Verstellachse des Betätigungsrings 43 verlaufender flacher, bei dem Betätigungsring 43 z.B. zylindrischer, Halte-Abschnitt 53a vorgelagert sein. Wenn die Formschlusselemente 35, z.B. die Kugeln 40, beispielsweise bei starker Belastung des Kupplungsarms 14, aus dem Bereich der Spannschräge 53 gelangen, hält sie der Halte-Abschnitt 53a dennoch so tief in den Formschlussaufnahmen 37, dass der Kupplungsarm 14 zuverlässig an der Halteaufnahme 15 verriegelt, wenn auch nicht verspannt ist.

Es ist auch möglich, einen zur Spannschräge 53 gegensinnig schrägen und/oder gerundeten Halte-Abschnitt 53b vorzusehen, der die Formschlusselemente 35 auch bei extremer Belastung des Kupplungsarms 14 in den Formschlussaufnahmen 37 hält.

Die Formschlussaufnahmen 37 für die Arbeitsstellung 22, die insoweit Arbeitsstellung-Formschlussaufnahmen bilden, haben zudem Einlaufschrägen 54. Die Einlaufschrägen 54 sind entgegen dem Kupplungsarm-Anschlag 30 geneigt und wirken im Sinne eines Verspannens des Kupplungsarms 14 an der Halteaufnahme 15. Die Einlaufschrägen 54 haben zudem einen Nachstelleffekt. Mit zunehmender Alterung und mechanischer Beanspruchung können die Kugeln 40 entlang der Einlaufschrägen 54 tiefer in die Kalotten-Formschlussaufnahmen 37 eindringen. Somit ist auch bei längerem Gebrauch der Anhängevorrichtung 10 ein fester Sitz des Kupplungsarmes 14 an der Halterung 11 gewährleistet.

Durch die Einlaufschrägen 54 und die Spannschräge 53 des Betätigungsrings 43-wird eine Spannkraft erzeugt, die den Kupplungsarm-Anschlag 30 gegen den Halteaufnahme-Anschlag 29 axial in einer mit der Bewegungsachse 16 korrelierenden Spannrichtung 55 verspannt. Der Betätigungsring 43 bildet somit einen Spannring.

Die Feder 45 wirkt unmittelbar auf eine untere Stirnseite 56 des Betätigungsrings 43. Es versteht sich, dass bei einem alternativen Konzept auch eine indirekte Krafteinwirkung eines Kraftspeichers möglich ist, beispielsweise über ein Kraftübertragungsgetriebe, eine Hebelanordnung oder dergleichen, was die Kraft des jeweiligen Kraftspeichers verstärkt.

An dem Stützring sind vorteilhaft Markierungen 57a, 57b zum Anzeigen der Schwenkposition des Kupplungsarms 14 für die Arbeitsstellung 22 und die Ruhestellung 23 vorgesehen.

Die Lagerausnehmungen 41 für die Formschlusselemente 35 sind äquidistant zueinander. Beispielsweise sind sie um 120° versetzt zueinander. Korrelierend dazu sind die Formschlussaufnahmen 37 und 38 jeweils um 120° zueinander drehwinkelversetzt am Kupplungsarm 14 angeordnet. Somit ist es möglich, dass die Verriegelungselemente bildenden Formschlusselemente 35 einmal in der Arbeitsstellung 22 und einmal in der Ruhestellung 23 jeweils in die in Umfangsrichtung des Kupplungsarms 14 gleich zueinander beabstandeten Formschlussaufnahmen 37 oder 38 eingreifen, auch wenn der Kupplungsarm 14 zwischen den Stellungen 22, 23 verdreht wird.

Die Formschlussaufnahmen 37, 38 sind in einem Längsabstand 58 zueinander beabstandet. Ferner sind sie um einen Drehwinkel 59 zueinander drehversetzt, so dass der Kupplungsarm 14 einen vom Winkelabstand (120°) der Formschlussaufnahmen 37 oder 38 jeweils zueinander unabhängige Schwenkwinkel, d.h. mehr oder weniger als der Formschlussaufnahme-Winkelabstand, zwischen der Arbeitsstellung 22 und der Ruhestellung 23 schwenken kann, z.B. etwa 90° bis 100° oder 130 - 150 Grad.

Das Vorsehen mehrerer Formschlusselemente 35, die gleichmäßig auf den Außenumfang des Kupplungsarms 14 wirken, bewirkt eine optimale und gleichmäßige Verspannung des Kupplungsarms 14 an der Halteaufnahme 15. Dadurch ist der Kupplungsarm 14 sicher und insbesondere unter Last, z.B. beim Anhängebetrieb, spielfrei verriegelt. Die verhältnismäßig starke Feder 45 sorgt dabei für einen Ausgleich, so dass etwaige durch die Anhängelast verursachte Schwingungen des Kupplungsarms 14 an der Halteaufnahme 15 ausgeglichen werden. Die Feder 45 wirkt auf die Verriegelungseinrichtung 25 selbstnachstellend.

Wenn der Kupplungsarm 14 die Arbeitsstellung 22 oder die Ruhestellung 23 erreicht hat, rasten die Formschlusselemente 35 aufgrund des Kraftspeichers 44 und des Betätigungsrings 43 selbsttätig in die Formschlussaufnahmen 37 oder 38 ein. Eine zuverlässige Verriegelung ist hörbar und an der Längsposition des Betätigungsrings 43 ersichtlich. Die korrekte Verriegelungsstellung des Betätigungsrings 43 kann durch eine optische Markierung gekennzeichnet sein.

Auch die Entriegelung der Verriegelungseinrichtung 25 gestaltet sich einfach. Mit einem Betätigungshebel 60 kann der Betätigungsring 43 mit verhältnismäßig geringer Bedienkraft betätigt werden. Der Betätigungshebel 60 ist schwenkbar an der Halterung 11 gelagert.

Am Schutzrohrabschnitt 28 ist eine Lagerhalterung 61 angeordnet, beispielsweise ein U-förmiges Halteteil mit zwei Halteschenkeln. Die Lagerhalterung 61 hält einen Lagerbolzen 62, dessen Lagerbolzenenden 63 seitlich vor die Lagerhalterung 61 vorstehen. An den Lagerbolzenenden 63 ist der Betätigungshebel 60 schwenkbar gelagert. Die Lagerbolzenenden 63 durchdringen Lageröffnungen oder -augen 64 an Betätigungshebelarmen 65 des Betätigungshebels 60.

Es ist vorteilhaft, beispielsweise die Lagerbolzenenden 63 umzukanten oder breit zu prägen, dass die Hebelarme 65 sicher an der Lagerbolzenenden 63 gehalten werden. Ferner ist es möglich, Sicherungselemente vorzusehen, beispielsweise Spannringe, Sicherungsschrauben oder dergleichen, die die Hebelarme 65 an den Lagerbolzenenden 63 halten.

Der Betätigungshebel 60 umgreift die Halterung 11. Betätigungsabschnitte 67 der Hebelarme 65 verlaufen seitlich außen an der Halterung 11 vorbei in einem solchen Abstand, dass Betätigungsschultern 68 an der Unterseite der Hebelarme 65 auf die obere Stirnseite des Betätigungsrings 43 wirken können. Somit wirkt der Betätigungshebel 60 von zwei Seiten her gleichmäßig auf den Betätigungsring 43.

Die Hebelarme 65 sind im Bereich der Betätigungsabschnitte 67 etwa U-förmig, wobei an einem Schenkelende die Lageröffnungen 64 angeordnet sind, der untere U-Abschnitt die Betätigungsschultern 68 aufweist und der andere U-Schenkel zum jeweils anderen Hebelarm 65 hin verlaufend in einen Handgriffabschnitt 69 übergeht. Die Hebelarme 65 sind am Handgriffabschnitt 69 miteinander verbunden, beispielsweise durch nicht dargestellte Schrauben oder miteinander verschweißt. Es versteht sich, dass zum bequemen Ergreifen ein Handstück am Handgriffabschnitt des Betätigungshebels 60 angeordnet sein kann, beispielsweise aus Kunststoff. Die Betätigungshebelarme 65 sind vorteilhaft aus Metall, beispielsweise Stanz-Biegeteile.

Beim Betätigen des Betätigungsrings 43 gleiten die Betätigungsschultern 68 an der Oberseite des Betätigungsrings 43 entlang. Der Betätigungshebel 60 ist entkoppelt vom Betätigungsring 43 bewegbar. Zwar wäre es möglich, beispielsweise über Mitnehmer oder dergleichen, eine direkte Kopplung herzustellen, was bei Nichtgebrauch den Vorteil hätte, dass der jeweilige Betätigungshebel auch bei Nichtgebrauch mit wenig Spiel oder gar spielfrei mit dem Betätigungsring gekoppelt wäre. Aber auch bei der Verriegelungseinrichtung 25 hat der Betätigungshebel 60 bei Nichtgebrauch kein oder wenig Spiel und ist sozusagen klapperfrei:

Der Kraftspeicher 44 drückt über den Betätigungsring 43 den Betätigungshebel 60 gegen Anschläge 70, die seitlich beispielsweise im Bereich der Betätigungsabschnitte 67 vor die Halterung 11 vorstehen. Die Anschläge 70 sind beispielsweise durch in den Schutzrohrabschnitt 28 eingeschraubte Bolzen 71 gebildet. Vorteilhafterweise haben die Betätigungsabschnitte 67 Ausnehmungen 72, in die die Bolzen 71 eingreifen können.

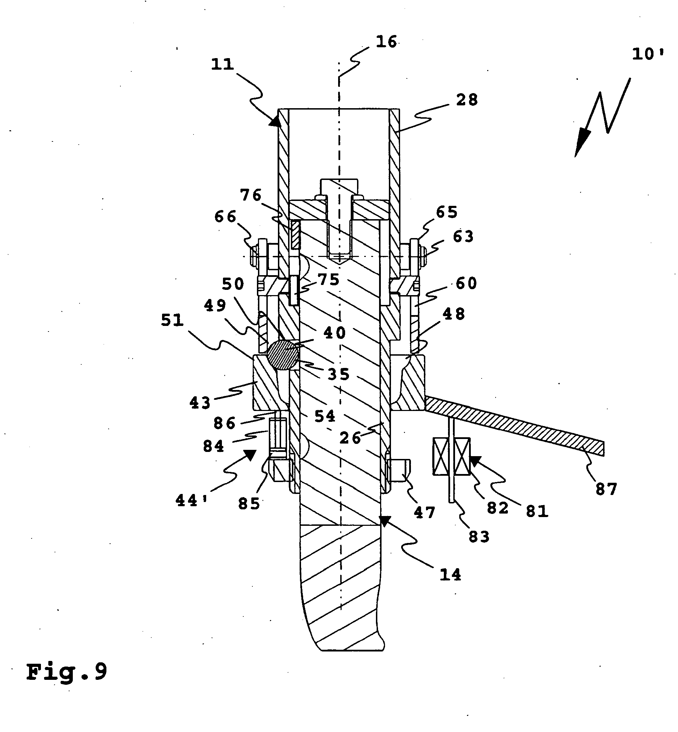

Zwar wirken die Kugeln 40 im Zusammenhang mit der Kalotten-Formschlussaufnahmen 37 als Verdrehsicherung für den Kupplungsarm 14. Dennoch ist es möglich, als zusätzliche Verdrehsicherung beispielsweise im Innern der Halteaufnahme 15 optional Formschlusskonturen 75, z.B. Längsnuten, vorzusehen, in die Formschlusskonturen 76, beispielsweise Führungsvorsprünge, am Kupplungsarm 14 eingreifen. Dies ist in Figur 9 dargestellt. Durch axiales Verstellen entlang der Bewegungsachse 16 sind die Formschlusskonturen 75, 76 in Eingriff oder außer Eingriff zu bringen. Der Bediener muss dann beim Verstellen des Kupplungsarms 14 in die Ruhestellung 23 zunächst den Betätigungshebel 60 in die Entriegelungsstellung nach unten verlagern und sodann den Kupplungsarm 14 um die Länge der Formschlusskonturen 75 in die Halteaufnahme 15 hineinschieben, dass die Formschlusskonturen 75, 76 außer Eingriff gelangen. Beim Verriegeln erfolgt die Bewegung entsprechend umgekehrt. Es versteht sich, dass auch außenseitige Formschlusskonturen, Formschlusskonturen im Bereich der vorderen Stirnseite der Halteaufnahme 15 oder dergleichen möglich sind.

Der Freigabebereich 48 und der Spannbereich 52 sind als konisch verlaufende Ringnuten ausgestaltet. Zum Betätigen und Freigeben der Formschlusselemente 35 sind aber auch jeweils in Betätigungsrichtung des jeweiligen Betätigungsrings verlaufende Längsnuten möglich, beispielsweise Axialnuten 77 bei einem Betätigungsring 43b oder schraubenförmig oder schräg verlaufende Längsnuten 78 bei einem Betätigungsring 43c.

Bei dem Betätigungsring 43c ist z.B. ein Kraftspeicher vorteilhaft, der eine Dreh-Verriegelungsbewegung bewirkt, z.B. eine in der Art der Feder 45 angeordnete, jedoch statt als Druckfeder als Torsionsfeder ausgestaltete Feder, die drehfest mit dem Betätigungsring 43c verbunden ist. Alternativ kann auch die Druck-Feder 45 als Kraftspeicher dienen.

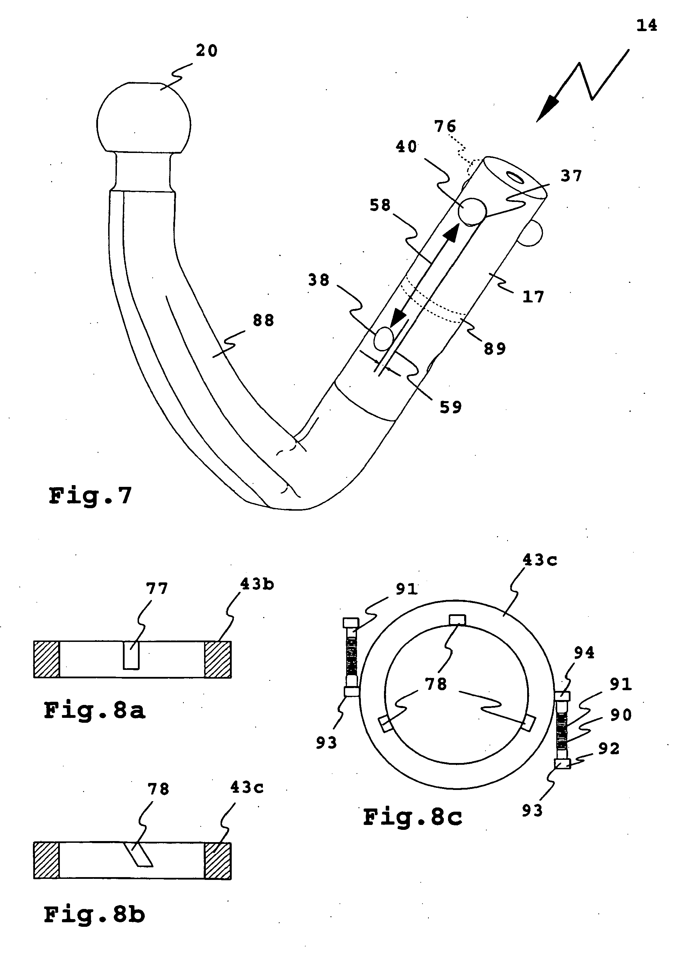

Ferner sind auch schematisch dargestellte Federn oder Federspeicher 91 (Figur 8c) möglich, die als selbsttätig verriegelnde Kraftspeicher 90 einer Verriegelungseinrichtung dienen. Die Federspeicher 91 greifen tangential am Außenumfang, z.B. ab Vorsprüngen 94, oder einer Stirnseite des Betätigungsrings 43c an und werden bei dessen Entriegelung auf Druck oder Zug bezüglich ortsfester Gegenhaltungen 92 gespannt, die z.B. an einer fahrzeugseitigen Halterung 93 für einen nicht dargestellten Kupplungsarm angeordnet sind.

Ein alternatives Entriegelungskonzept für den Betätigungsring 43 kann beispielsweise eine Zugeinrichtung, z.B. einen schematisch dargestellter Bowdenzug 79, vorsehen, der unmittelbar am Betätigungsring 43 angreift. Ein Betätigungsende des Bowdenzugs 79 ist beispielsweise im Innenraum des Zugfahrzeugs 13, beispielsweise im Kofferraum, angeordnet. Ferner ist es möglich, einen Bowdenzug 80 zum Betätigen des Betätigungshebels 60 vorzusehen. Auch der Bowdenzug 80 ist zweckmäßigerweise vom Innenraum des Zugfahrzeugs 13 aus betätigbar. Es versteht sich, dass die Betätigungsenden der Bowdenzüge 79 oder 80 auch beispielsweise an der Vorder- oder Oberseite des Stoßfängers 24 für einen Bediener bequem ergreifbar positioniert sein können.

In Figur 9 ist ferner schematisch ein elektrischer Entriegelungsantrieb 81 bei einer Anhängevorrichtung 10' angedeutet. Identische oder gleichwirkende Komponenten der Anhängevorrichtungen 10, 10' sind mit denselben Bezugszeichen versehen. Der Entriegelungsantrieb 81 enthält einen Elektromagneten 82, der bei Bestromung über eine Stellstange 83 den Betätigungsring 43 in die Entriegelungsstellung verlagert. Wenn der Elektromagnet 82 stromlos und somit unbetätigt ist, ist die Stellstange 83 frei beweglich, so dass der Kraftspeicher 44 den Betätigungsring 43 wieder in seine Verriegelungsstellung zurückverstellen kann.

Ein alternativer Kraftspeicher 44' ist beispielsweise ein pneumatischer Kraftspeicher 84 mit einem pneumatischen Zylinder 85, in dessen Innenraum sich Luft oder ein sonstiges gasförmiges Medium befindet, das bei Betätigung des Betätigungsrings 43 in seine Entriegelungsstellung komprimiert wird und das Bestreben hat, eine Kolbenstange 86 wieder aus dem Zylindergehäuse heraus zu bewegen. Die Kolbenstange 86 wirkt auf den Betätigungsring 43 und stellt ihn somit in seine Verriegelungsstellung zurück.

Das Verriegelungskonzept der Verriegelungseinrichtung 25, beispielsweise die Hebelbedienung und/oder das außenseitige Eingreifen von Formschlusselemente in einen Kupplungsarm, ist auch bei motorisch zwischen der Arbeitsstellung und der Ruhestellung verstellbaren Anhängevorrichtungen sowie bei Anhängevorrichtungen mit abnehmbarem Kupplungsarm realisierbar.

In Abhängigkeit von der Federkraft der Feder 45 ist es auch möglich, dass der Betätigungsring 43 bei einer vereinfachten Bauweise unmittelbar von Hand betätigt wird. Die Bewegung ist vereinfacht, wenn am Betätigungsring 43 beispielsweise ein Handgriff 87 angeordnet ist, der bequem ergreifbar ist. Der Handgriff 87 steht zweckmäßigerweise seitlich, insbesondere schräg nach unten vor den Betätigungsring 43 vor.

Die Bewegungsachse 16 steht schrägt zur Vertikalen. Dadurch ist eine Bewegung des Kupplungsarms 14 bei geringer Bodenfreiheit des Zugfahrzeugs 13 möglich. Es versteht sich, dass das erfindungsgemäße Funktionsprinzip auch bei Anhängevorrichtungen mit Bewegungsachsen in anderen Winkelpositionen möglich ist, beispielsweise bei senkrechtstehenden oder vertikalen Bewegungsachsen.

Bedingt durch den schrägen Verlauf der Bewegungsachse 16 ist ein Halsabschnitt 88 zwischen dem Haltebereich 18 und dem Kupplungsende 19 nicht nur nach oben, sondern auch seitlich gekrümmt verlaufend.

## Patentansprüche

1. Anhängevorrichtung für ein Zugfahrzeug (13) mit einem Kupplungsarm (14), an dessen Kupplungsende (19) eine Kupplungskugel (20) zum Anhängen eines Anhängers (21) angeordnet ist, mit einer am Zugfahrzeug (13) befestigbaren oder befestigten zugfahrzeugseitigen Halteaufnahme (15) zum Halten des Kupplungsarms (14) an einem zu dem Kupplungsende (19) beabstandeten Haltebereich (18) und mit einer Verriegelungseinrichtung (25) zum Verriegeln des Kupplungsarms (14) an der Halteaufnahme (15) zumindest in einer zum Anhängen des Anhängers (21) vorgesehenen Arbeitsstellung (22), wobei in einer Verriegelungsstellung der Verriegelungseinrichtung (25) mindestens ein bezüglich der Halteaufnahme (15) beweglich gelagertes Formschlusselement (35) einer Formschlusselementanordnung (36) von radial außen in mindestens eine Formschlussaufnahme (37, 38) einer Formschlussaufnahmeanordnung (39) am Außenumfang des Haltebereichs (18) formschlüssig eingreift, und wobei die Verriegelungseinrichtung (25) einen von der Halteaufnahme (15) durchdrungenen Betätigungsring (43) zum Verstellen des mindestens einen Formschlusselements (35) aus einer Freigabestellung, in der der Kupplungsarm (14) bezüglich der zugfahrzeugseitigen Halteaufnahme (15) beweglich ist, in die Verriegelungsstellung aufweist, **dadurch gekennzeichnet, dass** der Betätigungsring (43) an der Halteaufnahme (15) linear geführt ist und zum selbsttätigen Verriegeln der Verriegelungseinrichtung (25) durch einen Kraftspeicher (44) in die Verriegelungsstellung beaufschlagt ist.

2. Anhängevorrichtung nach Anspruch 1, **dadurch gekennzeichnet, dass** der Kraftspeicher (44) mindestens eine sich am Zugfahrzeug (13) oder an der Halteaufnahme (15) abstützende oder dort festgelegte Feder (45) aufweist, die beim Verstellen des Betätigungsrings (43) in die Freigabestellung vorgespannt wird.

3. Anhängevorrichtung nach Anspruch 2, **dadurch gekennzeichnet, dass** die Feder (45) von der Halteaufnahme (15) durchdrungen wird.

4. Anhängevorrichtung nach einem der vorhergehenden Ansprüche, **dadurch gekennzeichnet, dass** die Formschlusselementanordnung (36) mindestens drei, vorzugsweise fünf, in Umfangsrichtung des Kupplungsarms (14) zueinander beabstandete Formschlusselemente (35) aufweist.

5. Anhängevorrichtung nach einem der vorhergehenden Ansprüche, **dadurch gekennzeichnet, dass** die Verriegelungseinrichtung (25) den Kupplungsarm (14) drehfest an der Halteaufnahme (15) in der Verriegelungsstellung festlegt.

6. Anhängevorrichtung nach einem der vorhergehenden Ansprüche, **dadurch gekennzeichnet, dass** die Formschlusselementanordnung (36) einen Kupplungsarm-Anschlag (30) des Kupplungsarms (14) in der Verriegelungsstellung gegen einen Halteaufnahme-Anschlag (29) in einer Spannrichtung (55) spannt.

7. Anhängevorrichtung nach Anspruch 6, **dadurch gekennzeichnet, dass** der Halteaufnahme-Anschlag (29) im Innenraum der Halteaufnahme (15) angeordnet ist.

8. Anhängevorrichtung nach Anspruch 6 oder 7, **dadurch gekennzeichnet, dass** der Kupplungsarm-Anschlag (30) entgegen einer Richtung im Sinne eines Ausziehens des Kupplungsarms (14) aus der Halteaufnahme (15) wirksam ist.

9. Anhängevorrichtung nach einem der Ansprüche 6 bis 8, **dadurch gekennzeichnet, dass** die Formschlussaufnahmeanordnung (39) eine gegen den Kupplungsarm-Anschlag (30) geneigte Schrägfläche aufweist.

10. Anhängevorrichtung nach einem der vorhergehenden Ansprüche, **dadurch gekennzeichnet, dass** der Kupplungsarm (14) an der Halteaufnahme (15) zwischen der Arbeitsstellung (22) und einer für den Nichtgebrauch vorgesehenen Ruhestellung (23) beweglich gelagert ist.

11. Anhängevorrichtung nach Anspruch 10, **dadurch gekennzeichnet, dass** der Kupplungsarm (14) an der Halteaufnahme (15) bezüglich mindestens einer Bewegungsachse (16) schwenkbar und/oder linear verschiebbar ist.

12. Anhängevorrichtung nach einem der vorhergehenden Ansprüche, **dadurch gekennzeichnet, dass** die Formschlussaufnahmeanordnung (39) zum Festlegen des Kupplungsarms (14) in der Arbeitsstellung (22) mindestens eine Arbeitsstellungs-Formschlussaufnahme (37, 38) und zum Festlegen des Kupplungsarms (14) in der Ruhestellung (23) mindestens eine Ruhestellungs-Formschlussaufnahme aufweist, wobei die mindestens eine Arbeitsstellungs-Formschlussaufnahme und die mindestens eine Ruhestellungs-Formschlussaufnahme um einen Drehwinkel und/oder einen Linearabstand voneinander beabstandet sind.

13. Anhängevorrichtung nach einem der vorhergehenden Ansprüche, **dadurch gekennzeichnet, dass** an der Halteaufnahme (15) und dem Kupplungsarm (14) als Verdrehsicherung des Kupplungsarms (14) wirksame Formschlusskonturen (75, 76) vorhanden sind, die durch lineares Verstellen des Kupplungsarms (14) bezüglich der Halteaufnahme (15) in Eingriff und außer Eingriff bringbar sind.

14. Anhängevorrichtung nach einem der vorhergehenden Ansprüche, **dadurch gekennzeichnet, dass** die Formschlusselementanordnung (36) mindestens einen Wälzkörper und/oder mindestens eine Kugel umfasst.

15. Anhängevorrichtung nach einem der vorhergehenden Ansprüche, **dadurch gekennzeichnet, dass** die Formschlussaufnahmeanordnung (39) eine Umfangsnut oder Teilumfangsnut am Kupplungsarm (14) und/oder mindestens eine Kugelkalotte aufweist.

16. Anhängevorrichtung nach einem der vorhergehenden Ansprüche, **dadurch gekennzeichnet, dass** das mindestens eine Formschlusselement (35) an der Halteaufnahme (15) bezüglich des Haltebereichs (18) radial verschieblich gelagert ist.

17. Anhängevorrichtung nach einem der vorhergehenden Ansprüche, **dadurch gekennzeichnet, dass** der Betätigungsring (43) einen Freigabebereich (48) aufweist, in den das mindestens eine Formschlusselement (35) bezüglich des Kupplungsarms (14) nach radial außen in die Freigabestellung verlagerbar ist.

18. Anhängevorrichtung nach einem der vorergehenden Ansprüche, **dadurch gekennzeichnet, dass** der Betätigungsring (43) einen Spannbereich (52) zum Spannen des mindestens einen Formschlusselements (35) in die Verriegelungsstellung aufweist.

19. Anhängevorrichtung nach einem der vorhergehenden Ansprüche, **dadurch gekennzeichnet, dass** der Betätigungsring (43) das mindestens eine Formschlusselement (35) in der Freigabestellung in dem Freigabebereich (48) hält, so dass das mindestens eine Formschlusselement (35) nicht aus dem Freigabebereich (48) freikommt und verloren gehen kann.

20. Anhängevorrichtung nach einem der vorhergehenden Ansprüche, **dadurch gekennzeichnet, dass** sie eine Kraftverstärkungseinrichtung zum Betätigen des Betätigungsrings (43) unter Verstärkung einer Bedienkraft eines Bedieners aufweist.

21. Anhängevorrichtung nach einem der vorhergehenden Ansprüche, **dadurch gekennzeichnet, dass** sie einen Betätigungshebel (60) zum Betätigen des Betätigungsrings (43) aufweist.

22. Anhängevorrichtung nach Anspruch 21, **dadurch gekennzeichnet, dass** der Betätigungshebel (60) zwei Hebelarme (65) aufweist, die die Halteaufnahme (15) umgreifend auf den Betätigungsring (43) wirken.

23. Anhängevorrichtung nach einem der vorhergehenden Ansprüche, **dadurch gekennzeichnet, dass** sie eignen insbesondere von einem Innenraum des Zugfahrzeugs (13) betätigbaren Bowdenzug (79, 80) zum direkten oder indirekten Betätigen des Betätigungsrings (43) aufweist.

24. Anhängevorrichtung nach einem der vorhergehenden Ansprüche, **dadurch gekennzeichnet, dass** sie eine motorische Antriebsanordnung zum Betätigen des Betätigungsrings (43) in die Freigabestellung aufweist.

## Claims

1. Towing device for a towing vehicle (13), with a coupling arm (14) at the coupling end (19) of which is provided a hitch ball (20) for attaching a trailer (21), with a holding receptacle (15) which can be or is secured to the towing vehicle (13) in order to hold the coupling arm (14) in a holding region (18) sited at a distance from the coupling end (19), and with a locking device (25) for locking the coupling arm (4) on the holding receptacle (15) at least in an operative position (22) provided for attaching the trailer (21), wherein, in a locked position of the locking device (25), at least one positive-locking element (35) of a positive-locking element arrangement (36), which is movably mounted with respect to the holding receptacle (15), positively engages radially from the outside at least one positive-locking receptacle (37, 38) of a positive-locking receptacle arrangement (39) on the outer circumference of the holding region (18), and wherein the locking device (25) comprises an operating ring (43) penetrated by the holding receptacle (15) for moving the at least one positive-locking element (35) from a release position, in which the coupling arm (14) is movable with respect to the holding receptacle (15) on the towing vehicle, into the locked position, **characterised in that** the operating ring (43) is guided on the holding receptacle (15) in a linear fashion and pressurised by a power accumulator (44) towards the locked position for the automatic locking of the locking device (25).

2. Towing device according to claim 1, **characterised in that** the power accumulator (44) comprises at least one spring (45) which is supported on or secured to the towing vehicle (13) or the holding receptacle (15) and which is preloaded towards the release position when the operating ring (43) is moved.

3. Towing device according to claim 2, **characterised in that** the holding receptacle (15) passes through the spring (45).

4. Towing device according to any of the preceding claims, **characterised in that** the positive-locking element arrangement (36) comprises at least three, preferably five, positive-locking elements (35) arranged at a distance from one another in the circumferential direction of the coupling arm (14).

5. Towing device according to any of the preceding claims, **characterised in that** the locking device (25) non-rotatably locates the coupling arm (14) on the holding receptacle (15) in the locked position.

6. Towing device according to any of the preceding claims, **characterised in that** the positive-locking element arrangement (36) clamps a coupling arm stop (30) of the coupling arm (14) against a holding receptacle stop (29) in the locked position in a clamping direction (55).

7. Towing device according to claim 6, **characterised in that** the holding receptacle stop (29) is located in the interior of the holding receptacle (15).

8. Towing device according to claim 6 or 7, **characterised in that** the coupling arm stop (30) is effective against a direction in which the coupling arm (14) is withdrawn from the holding receptacle (15).

9. Towing device according to any of claims 6 to 8, **characterised in that** the positive-locking receptacle arrangement (39) has an inclined surface which is inclined towards the coupling arm stop (30).

10. Towing device according to any of the preceding claims, **characterised in that** the coupling arm (14) is mounted on the holding receptacle (15) for movement between the operative position (22) and an inoperative position (23) provided for non-use.

11. Towing device according to claim 10, **characterised in that** the coupling arm (14) is mounted on the holding receptacle (15) in such a way that it is pivotable and/or linearly displaceable with respect to at least one motion axis (16).

12. Towing device according to any of the preceding claims, **characterised in that** the positive-locking receptacle arrangement (39) comprises at least one operative position positive-locking receptacle (37, 38) for locking the coupling arm (14) in the operative position (22) and at least one inoperative position positive locking receptacle for locking the coupling arm (14) in the inoperative position, wherein the at least one operative position positive-locking receptacle and the at least one inoperative position positive locking receptacle are distanced from one another by a rotary angle and/or by a linear distance.

13. Towing device according to any of the preceding claims, **characterised in that** the holding receptacle (15) and the coupling arm (14) are provided with positive-locking contours (75, 76) which secure the coupling arm (14) against rotation and which can be brought into and out of engagement relative to the holding receptacle (15) by means of a linear displacement of the coupling arm (14).

14. Towing device according to any of the preceding claims, **characterised in that** the positive-locking element arrangement (36) includes at least one rolling element and/or at least one ball.

15. Towing device according to any of the preceding claims, **characterised in that** the positive-locking receptacle arrangement (39) comprises a circumferential groove or a groove extending along a part of the circumference at the coupling arm (14) and/or at least one universal ball joint.

16. Towing device according to any of the preceding claims, **characterised in that** the at least one positive-locking element (35) is mounted on the holding receptacle (15) in a manner capable of radial displacement with respect to the holding region (18).

17. Towing device according to any of the preceding claims, **characterised in that** the operating ring (43) comprises a release region (48) into which the at least one positive-locking element (35) can be displaced in a radially outward direction into the release position with respect to the coupling arm (14).

18. Towing device according to any of the preceding claims, **characterised in that** the operating ring (43) comprises a clamping region (52) for clamping the at least one positive-locking element (35) in the locked position.

19. Towing device according to any of the preceding claims, **characterised in that** the operating ring (43) holds the at least one positive-locking element (35) in the release region (48) in the release position, so that the at least one positive-locking element (35) cannot be released from the release region (48) and get lost.

20. Towing device according to any of the preceding claims, **characterised in that** it comprises a boosting device for operating the operating ring (43) aided by boosting an operating force of an operator.

21. Towing device according to any of the preceding claims, **characterised in that** it comprises an operating lever (60) for operating the operating ring (43).

22. Towing device according to claim 21, **characterised in that** the operating lever (60) has two lever arms (65) which act on the operating ring (43) while encompassing the holding receptacle (15).

23. Towing device according to any of the preceding claims, **characterised in that** it comprises a control cable (79, 80) which can in particular be operated from an interior of the towing vehicle (13) for the direct or indirect operation of the operating ring (43).

24. Towing device according to any of the preceding claims, **characterised in that** it comprises a motorised drive arrangement for operating the operating ring (43) into the release position.

## Revendications

1. Dispositif d'attelage pour un véhicule tracteur (13) comprenant un bras d'attelage (14), sur l'extrémité duquel (19) est agencée une boule d'attelage (20) pour l'attelage d'une remorque (21), un logement de retenue (15) côté véhicule tracteur fixé ou pouvant être fixé sur le véhicule tracteur (13) pour la retenue du bras d'attelage (14) sur une zone de retenue (18) espacée de l'extrémité d'attelage (19), et un dispositif de verrouillage (25) pour le verrouillage du bras d'attelage (14) sur le logement de retenue (15) au moins dans une position de travail (22) prévue pour l'attelage de la remorque (21), sachant que dans une position de verrouillage du dispositif de verrouillage (25), au moins un élément positif (35), logé de manière mobile par rapport au logement de retenue (15), d'un ensemble d'éléments positifs (36) s'engage positivement radialement de l'extérieur dans au moins un logement positif (37, 38) d'un ensemble de logements positifs (39) sur la périphérie extérieure de la zone de retenue (18), et sachant que le dispositif de verrouillage (25) présente une bague d'actionnement (43) traversant le logement de retenue (15) pour le déplacement d'au moins un élément positif (35) d'une position de libération, dans laquelle le bras d'attelage (14) est mobile par rapport au logement de retenue (15) côté véhicule tracteur, à la position de verrouillage, **caractérisé en ce que** la bague d'actionnement (43) est guidée de manière linéaire sur le logement de retenue (15) et est sollicitée pour le verrouillage automatique du dispositif de verrouillage (25) par un accumulateur d'énergie (44) dans la position de verrouillage.

2. Dispositif d'attelage selon la revendication 1, **caractérisé en ce que** l'accumulateur d'énergie (44) présente au moins un ressort (45) s'appuyant ou fixé sur le véhicule tracteur (13) ou le logement de retenue (15) et précontraint lors du déplacement de la bague d'actionnement (43) dans la position de libération.

3. Dispositif d'attelage selon la revendication 2, **caractérisé en ce que** le ressort (45) traverse le logement de retenue (15).

4. Dispositif d'attelage selon l'une quelconque des revendications précédentes, **caractérisé en ce que** l'ensemble d'éléments positifs (36) présente au moins trois, de préférence cinq éléments positifs (35) espacés les uns des autres dans le sens périphérique du bras d'attelage (14).

5. Dispositif d'attelage selon l'une quelconque des revendications précédentes, **caractérisé en ce que** le dispositif de verrouillage (25) fixe de manière solidaire en rotation le bras d'attelage (14) sur le logement de retenue (15) dans la position de verrouillage.

6. Dispositif d'attelage selon l'une quelconque des revendications précédentes, **caractérisé en ce que** l'ensemble d'éléments positifs (36) tend une butée (30) du bras d'attelage (14) dans la position de verrouillage contre une butée de logement de retenue (29) dans un sens de tension (55).

7. Dispositif d'attelage selon la revendication 6, **caractérisé en ce que** la butée de logement de retenue (29) est disposée dans l'espace intérieur du logement de retenue (15).

8. Dispositif d'attelage selon la revendication 6 ou 7, **caractérisé en ce que** la butée de bras d'attelage (30) est active dans un sens inverse au sens d'un enlèvement du bras d'attelage (12) du logement de retenue (15).

9. Dispositif d'attelage selon l'une quelconque des revendications 6 à 8, **caractérisé en ce que** l'ensemble de logements positifs (39) présente une surface oblique inclinée contre la butée du bras d'attelage (30).

10. Dispositif d'attelage selon l'une quelconque des revendications précédentes, **caractérisé en ce que** le bras d'attelage (14) est logé de manière mobile sur le logement de retenue (15) entre la position de travail (22) et une position de repos (23) prévue pour la non utilisation.

11. Dispositif d'attelage selon la revendication 10, **caractérisé en ce que** le bras d'attelage (14) est mobile de manière pivotante et/ou linéaire sur le logement de retenue (15) par rapport à au moins un axe de déplacement (16).

12. Dispositif d'attelage selon l'une quelconque des revendications précédentes, **caractérisé en ce que** l'ensemble de logements positifs (39) pour la fixation du bras d'attelage (14) dans la position de travail (22) présente au moins un logement positif de position de travail (37, 38) et pour la fixation du bras d'attelage (14) dans la position de repos (23) au moins un logement positif de position de repos, sachant qu'au moins un logement positif de position de travail et au moins un logement positif de position de repos sont espacés l'un de l'autre d'un angle de rotation et/ou d'une distance linéaire.

13. Dispositif d'attelage selon l'une quelconque des revendications précédentes, **caractérisé en ce que** des contours positifs (75, 76) agissant comme un blocage contre toute rotation du bras d'attelage (14) sont présents sur le logement de retenue (15) et le bras d'attelage (14), lesquels contours peuvent s'engager et se désengager en déplaçant linéairement le bras d'attelage (14) par rapport au logement de retenue (15).

14. Dispositif d'attelage selon l'une quelconque des revendications précédentes, **caractérisé en ce que** l'ensemble d'éléments positifs (36) comporte au moins un corps de roulement et/ou au moins une sphère.

15. Dispositif d'attelage selon l'une quelconque des revendications précédentes, **caractérisé en ce que** l'ensemble de logements positifs (39) présente une rainure périphérique ou une rainure périphérique partielle sur le bras d'attelage (14) et/ou au moins une calotte sphérique.

16. Dispositif d'attelage selon l'une quelconque des revendications précédentes, **caractérisé en ce qu'**au moins un élément positif (35) est logé de manière radialement mobile sur le logement de retenue (15) par rapport à la zone de retenue (18).

17. Dispositif d'attelage selon l'une quelconque des revendications précédentes, **caractérisé en ce que** la bague d'actionnement (43) présente une zone de libération (48), dans laquelle au moins un élément positif (35) peut être déplacé radialement vers l'extérieur dans la position de libération par rapport au bras d'attelage (14).

18. Dispositif d'attelage selon l'une quelconque des revendications précédentes, **caractérisé en ce que** la bague d'actionnement (43) présente une zone de tension (52) pour la tension d'au moins un élément positif (35) dans la position de verrouillage.

19. Dispositif d'attelage selon l'une quelconque des revendications précédentes, **caractérisé en ce que** la bague d'actionnement (43) maintient au moins un élément positif (35) dans la position de libération dans la zone de libération (48) de sorte qu'au moins un élément positif (35) ne sorte pas de la zone de libération (48) et ne puisse pas être perdu.

20. Dispositif d'attelage selon l'une quelconque des revendications précédentes, **caractérisé en ce qu'**il présente un dispositif de renforcement de force pour l'actionnement de la bague d'actionnement (43) en renforçant une force de manipulation d'un opérateur.

21. Dispositif d'attelage selon l'une quelconque des revendications précédentes, **caractérisé en ce qu'**il présente un levier d'actionnement (60) pour l'actionnement de la bague d'actionnement (43).

22. Dispositif d'attelage selon la revendication 21, **caractérisé en ce que** le levier d'actionnement (60) présente deux bras de levier (65) qui agissent de manière à entourer le logement de retenue sur la bague d'actionnement (43).

23. Dispositif d'attelage selon l'une quelconque des revendications précédentes, **caractérisé en ce qu'**il présente un câble Bowden (79, 80) pouvant être actionné- en particulier depuis un espace intérieur du véhicule tracteur (13) pour l'actionnement direct ou indirect de la bague d'actionnement (43).

24. Dispositif d'attelage selon l'une quelconque des revendications précédentes, **caractérisé en ce qu'**il présente un ensemble d'entraînement motorisé pour l'actionnement de la bague d'actionnement (43) dans la position de libération.
